# EUROPÄISCHE PATENTSCHRIFT

(11) **EP 1 582 409 B1**
(45) Veröffentlichungstag und Bekanntmachung des Hinweises auf die Patenterteilung: **12.07.2006**
(21) Anmeldenummer: 05007037.4
(22) Anmeldetag: 31.03.2005
(51) Int. Cl.: B60R 11/02

(54) **Gerätehalter für Kleincomputer oder ähnliche Geräte**
Mount for personal digital assistant or similar
Support pour assistant numérique personnel ou similaire

(30) Priorität: 03.04.2004 DE 102004016558
(43) Veröffentlichungstag der Anmeldung: 05.10.2005
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- [Online] 3. Februar 2004 (2004-02-03), XP002332653 Gefunden im Internet: URL:http://web.archive.org/web/20040206212 318/www.arkon.com/pdamount.html> [gefunden am 2005-06-17]

## Beschreibung

Die Erfindung betrifft einen Gerätehalter für Kleincomputer in Taschenformat, wie sie üblicherweise als PDA (Personal Digital Assistent) bezeichnet werden, oder für vergleichbare Geräte wie beispielsweise Mobiltelefone, sogenannte Smartphones, und ähnliche Geräte. Solche Kleincomputer, die als Organisationscomputer, Telefonbuch und andere Zwecke eingesetzt werden, werden häufig auch als GPS-Navigationssystem benutzt. Für die Verwendung dieser Taschencomputer im Auto, am Schreibtisch oder dergleichen dienen Gerätehalter (sogenannte PDA-Halter), die dafür ausgelegt sind, den Kleincomputer nach Bedarf mit einem Handgriff einlegen und wieder herausnehmen zu können. Diese Gerätehalter, die ihrerseits üblicherweise mittels eines sogenannten Schwanenhalses, nämlich eines in die gewünschte Position biegbaren Tragarms, mit einer Konsole zur Befestigung irgendwo am Auto oder zum Aufstellen auf dem Schreibtisch verbunden sind, haben einen Plattenkörper zum Auflegen des Kleincomputers mit zwei seitlichen gepolsterten Klemmbacken, die zwischen einer arretierten Offenstellung und einer Klemmstellung beweglich sind, in der sie den Kleincomputer an seinen beiden Seiten festhalten. Da der Gerätehalter in seiner Gebrauchslage mehr oder weniger steil geneigt ist, hat der Plattenkörper außerdem an seiner unten liegenden Seite üblicherweise zwei Finger, die als Anschläge für den unten liegenden Kantenbereich des Kleincomputers beim Einlegen in den Gerätehalter dienen.

Da bei den verschiedenen Fabrikaten von Taschencomputem dieser Art die Anordnung der Stecker und Kabelanschlüsse im Unterkantenbereich des Kleincomputers sehr unterschiedlich ist, teils mittig, teils nach der einen oder anderen Seite mehr oder weniger weit versetzt angeordnet ist, bedarf es für jeden Kleincomputertyp eines passenden Gerätehalters, bei dem die Anschlagfinger so angeordnet sind, daß keine Überschneidung oder Überdeckung mit den Stecker- und Kabelanschlüssen des Kleincomputers vorhanden ist. Eine universelle Verwendbarkeit solcher Gerätehalter für verschiedene Kleincomputertypen ist deshalb bisher nicht möglich. Einer solchen universellen Verwendbarkeit steht weiter der Umstand entgegen, daß an zumindest manchen Kleincomputern auch seitlich Bedienungselemente oder dergleichen angeordnet nicht und daher auch die Klemmbacken am Gerätehalter in der richtigen Position weiter oben oder weiter unten angeordnet sein müssen, je nach dem Typ des Kleincomputers.

Ein solcher Gerätehalter ist als CM 628 der Firma Arkon Resources Inc, Arcadia, California USA. Dieser Gerätehalter für Kleincomputer oder ähnliche Geräte, ist
- mit einem in der Gebrauchslage geneigten Plattenkörper als Auflagefläche für das Gerät,
- weiter mit zwei beiderseits am Plattenkörper außermittig angeordneten Klemmbacken zum Fixieren eines aufgelegten Geräts,
- und mit zwei Anschlagfingern versehen, wobei die Anschalgfinger als separate Bauteile ausgebildet und mit einem Fußteil in einer entlang des Plattenkörperrands angeordneten Schiebeführung gehaltert sind.

Aufgabe der Erfindung ist es daher, einen Gerätehalter der dargestellten Art im Hinblick auf eine möglichst universelle Verwendbarkeit mit verschiedenen Typen von Kleincomputern oder ähnlichen Geräten auszubilden.

Diese Aufgabe wird gemäß der Erfindung durch die im Anspruch 1 angegebene Anordnung gelöst. Vorteilhafte Weiterbildungen und Ausgestaltungen der Erfindung sind Gegenstand der Unteransprüche.

Mit der erfindungsgemäß vorgesehenen seitlich verschiebbaren und zwischen gegenüberliegenden seiten des Gerätehalters umsteckbaren Anordnung der Finger in Verbindung mit höhenmäßig außermittig angeordneten Klemmbacken kann der Gerätehalter je nach Anordnung seitlicher Bedienungselemente am Kleincomputer in der jeweils günstigsten von zwei um 180° gedrehten möglichen Stellungen benutzt werden.

Ein Ausführungsbeispiel der Erfindung wird nachstehend unter Bezugnahme auf die anliegenden Zeichnungen mehr im einzelnen beschrieben. In den Zeichnungen zeigt:

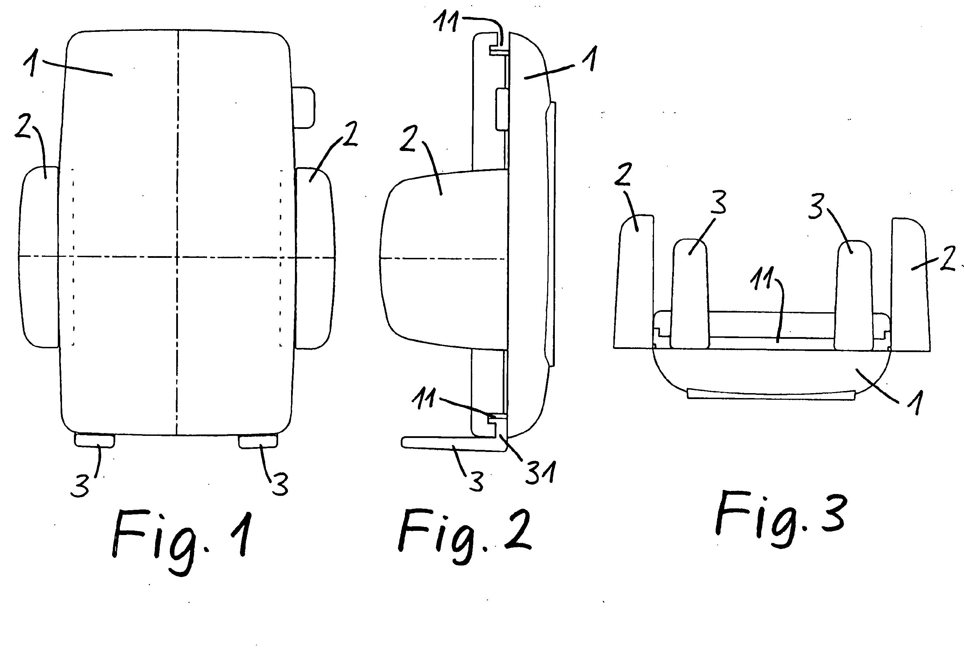

- Fig. 1: eine Draufsicht bzw. Frontansicht eines Gerätehalters nach der Erfindung,
- Fig. 2: eine Seitenansicht des Gerätehalters, und
- Fig. 3: eine Stimansicht des Gerätehalters von unten.

Die Zeichnungen zeigen in schematisierter Form unter Weglassung weiterer Einzelheiten nur die erfindungswesentlichen Aspekte.

Der in den Zeichnungen dargestellte Gerätehalter weist einen Plattenkörper 1, der eine Auflagefläche für das Gerät bildet und in der Gebrauchslage eine geneigte Position hat, zwei beiderseits des Plattenkörpers 1 angeordnete bewegliche Klemmbacken 2, und an der unteren Schmalseite des Plattenkörpers 1 zwei Anschlagfinger 3 auf.

Der Plattenkörper 1 ist als flacher Kasten ausgebildet und nimmt den Betätigungs- und Vorspannmechanismus für die Klemmbacken 2 auf. Die Unterseite des Plattenkörpers 1 ist, beispielsweise mit einer entsprechenden Schlitzanordnung (nicht dargestellt) zum Kuppeln mit dem Kopf eines Tragarms ausgebildet.

Die beiden seitlichen Klemmbacken 2 sind zwischen einer nach außen verschobenen Öffnungsstellung (nicht dargestellt) und einer Klemmstellung (dargestellt) bewegbar. Die Klemmbacken 2 sind beim Ausführungsbeispiel, wie in den Zeichnungen ersichtlich, nicht in der Mitte der Längsseiten des Plattenkörpers 1 angeordnet, sondern außermittig in Richtung zur einen Schmalseite hin versetzt.

Die Anschlagfinger 3 sind entgegen bisheriger Praxis nicht starr am Plattenkörper angeformt, sondern jeweils als separate Bauteile ausgebildet. Sie sind jeweils mit einem Fußteil 31 in eine Schiebeführungskulisse 11 des Plattenkörpers 1 eingesetzt und darin voneinander unabhängig nach Bedarf seitlich verschiebbar und in eine jeweils zweckentsprechende Position einstellbar.

Eine solche Schiebeführungskulisse 11 ist an beiden Schmalseiten des Plattenkörpers 1 angeordnet, und diese Schiebeführungskulissen münden an beiden Enden offen aus, so daß die Anschlagfinger 3 wahlweise umgesteckt, d. h. aus der einen Schiebeführungskulisse 11 herausgenommen und in die andere Schiebeführungskulisse 11 eingesetzt werden können, je nachdem, ob im Hinblick auf seitliche Bedienungselemente oder dergleichen am Kleincomputer die Klemmbacken aus der Mitte des Plattenkörpers nach oben oder unten versetzt angeordnet sein müssen, was dann durch einfaches Umdrehen des Gerätehalters erreicht werden kann.

Die Ausbildung des Gerätehalters mit zwei Schiebeführungskulissen 11, wie beim Ausführungsbeispiel dargestellt und vorstehend beschrieben, ist dann sinnvoll, wenn die Klemmbacken, wie beim Ausführungsbeispiel dargestellt, außermittig angeordnet sind. Dasselbe gilt aber auch, wenn mittig oder außermittig versetzt angeordnete Klemmbacken Fenster oder Aussparungen haben, die nicht symmetrisch angeordnet sind, oder, kurz gesagt, wenn aufgrund der Backen oder auch eines anderen Merkmals des Gerätehalters das Drehen des Gerätehalters um 180° eine veränderte Situation für das gehalterte Gerät schafft.

Es versteht sich, daß an den beiden Enden der Schiebeführungskulissen 11 Rasten, Stopfen, Schrauben oder dergleichen (nicht dargestellt) vorgesehen sein können, die überwunden oder gelöst werden müssen, um ein Herausnehmen der Anschlagfinger 3 aus der betreffenden Kulisse 11 zu ermöglichen. Dies ist jedoch nicht notwendig, da die Anschlagfinger 3 mit ihren Fußteilen 31 mit ausreichend großem Gleitwiderstand in der jeweiligen Kulisse 11 sitzend angeordnet werden können, damit ein ungewolltes Verrutschen der Anschlagfinger auch bei Erschütterungen unterbleibt.

## Patentansprüche

1. Gerätehalter für Kleincomputer oder ähnliche Geräte,
- mit einem in der Gebrauchslage geneigten Plattenkörper (1) als Auflagefläche für das Gerät,
- weiter mit zwei beiderseits am Plattenkörper (1) außermittig angeordneten und/oder außermittige oder asymmetrische Fenster aufweisenden Klemmbacken (2) zum Fixieren eines aufgelegten Geräts,
- und mit vorzugsweise zwei Anschlagfingern (3), die jeweils als separate Bauteile ausgebildet und mit einem Fußteil (31) in einer entlang des Plattenkörperrands angeordneten Schiebeführung (11) gehaltert sind,
- wobei der Plattenkörper (1) an gegenüberliegenden Seiten mit jeweils einer Schiebeführung (11) ausgebildet ist und die Anschlagfinger (3) wahlweise zwischen den Schiebeführungen (11) der einen und der anderen Plattenkörperseite umsteckbar sind.

2. Gerätehalter nach Anspruch 1, wobei die Schiebeführungen (11) jeweils als Schiebeführungskulisse oder Schiebeführungsnut am Plattenkörper (1) ausgebildet ist, in welche der Fußteil (31) der Anschlagfinger (3) eingreift.

3. Gerätehalter nach Anspruch 1 oder 2, wobei jede Schiebeführung (11) an ihren beiden Enden mit lösbaren oder überwindbaren Anschlag- oder Arretierungsorganen versehen ist.

## Claims

1. A device holder for small computers or similar devices,
- with a plate member (1) used as a support surface for the device, said plate member tilted in its position of use,
- and with two clamping jaws (2) eccentrically located on both sides of the plate member (1) and/or containing eccentric or asymmetric windows to secure a supported device,
- and with preferably two backstop fingers (3), each of which is designed as a separate component and is held by means of a base (31) in a sliding guide (11) located along the edge of the plate member,
- wherein the plate member (1) is designed to contain a sliding guide (11) on opposite sides and wherein the backstop fingers (3) can be interchanged between the sliding guides (11) of on or the other side of the plate member.

2. The device holder according to claim 1, wherein each of the sliding guides (11) is designed as a sliding guide slot or sliding guide notch in the plate member (1) in which slot or notch the base (31) of the backstop fingers (3) engages.

3. The device holder according to claim 1 or 2, wherein both ends of each of the sliding guides (11) are provided with removable or negotiable stop or locking mechanisms.

## Revendications

1. Support d'appareil pour mini-ordinateurs ou appareils similaires, comprenant
- un corps en forme de plaque (1) incliné en position d'utilisation, servant de surface d'appui de l'appareil,
- en outre deux mâchoires de serrage (2) destinées à la fixation d'un appareil posé, disposées de chaque côté de façon excentrée sur le corps en forme de plaque (1) et/ou présentant des fenêtres excentrées ou asymétriques,
- et de préférence deux doigts de butée (3) qui sont chacun réalisés en tant qu'élément séparé et sont maintenus chacun avec un pied (31) dans un guidage coulissant (11) disposé le long du bord du corps en forme de plaque,
- le corps en forme de plaque (1) étant réalisé avec un guidage coulissant (11) sur chacun des côtés opposés et les doigts de butée (3) pouvant être insérés, au choix, entre les guidages coulissants (11) de l'un ou de l'autre côté du corps en forme de plaque.

2. Support d'appareil selon la revendication 1, les guidages coulissants (11) étant réalisés chacun sous la forme de coulisse de guidage coulissant ou de rainure de guidage coulissant sur le corps en forme de plaque (1), dans laquelle s'engrène le pied (31) des doigts de butée (3).

3. Support d'appareil selon la revendication 1 ou 2, chaque guidage coulissant (11) étant muni à ses deux extrémités d'organes de butée ou d'arrêt débrayables ou déclenchables.
